# EUROPEAN PATENT SPECIFICATION

(11) **EP 1 369 012 B1**
(45) Date of publication and mention of the grant of the patent: **16.04.2008**
(21) Application number: 03076270.2
(22) Date of filing: 01.05.2003
(51) Int. Cl.: A01B 79/00

(54) **An assembly for performing crop harvesting**
Anordnung zum Ernten
Ensemble pour récolter

(30) Priority: 06.06.2002 NL 1020802
(43) Date of publication of application: 10.12.2003
(73) Proprietor: Lely Enterprises AG, 6300 ZUG (CH)
(72) Inventor: De Groen, Franciscus Johannes Adrianus, 3223 ME Hellevoetsluis (NL); van der Lely, Alexander, 3065 NA Rotterdam (NL)
(74) Representative: Corten, Maurice Jean F.M.

(56) References cited:
- WO-A-00/35265
- DE-A- 19 705 842
- US-A- 5 438 817

## Description

The invention relates to an assembly for performing a crop harvesting operation according to the preamble of claim 1.

Such an assembly is generally known from e.g. US 5,438, 817. The invention aims at providing an alternative assembly.

For this purpose, an assembly for performing a crop harvesting operation of the above-described type comprises the features of the characterizing part of claim 1. This makes it possible for example to move the autonomous harvesting machine to the harvest container depending on the measured amount. Due to the fact that the autonomous transport machine automatically conveys the harvested product (for example grass) to the harvest container, the assembly can continue to work automatically for a long time.

For the purpose of moving the autonomous transport machine in a simple manner to the storage container, it is advantageous if the control-unit is provided with a route-information system for containing position-information about the harvest container. The assembly is in particular provided with a position-determining system for determining the momentary position of the transport machine and/or the harvesting machine.

As the crop subjected to the harvesting operation is preferably processed further, it is advantageous if the harvesting machine is provided with means for making the harvested crop on which the harvesting operation has been performed ready for transport. It is in particular advantageous if the harvesting machine is provided with means for making the harvested crop on which the harvesting operation has been performed ready for storage. Such a processing device may for example chop, press, wrap, dry (or carry out similar treatments on) the harvested product. The harvesting machine comprises in particular a crop-pick-up device and/or a mowing-unit.

The invention will be explained hereinafter in further detail with reference to the drawing, in which:

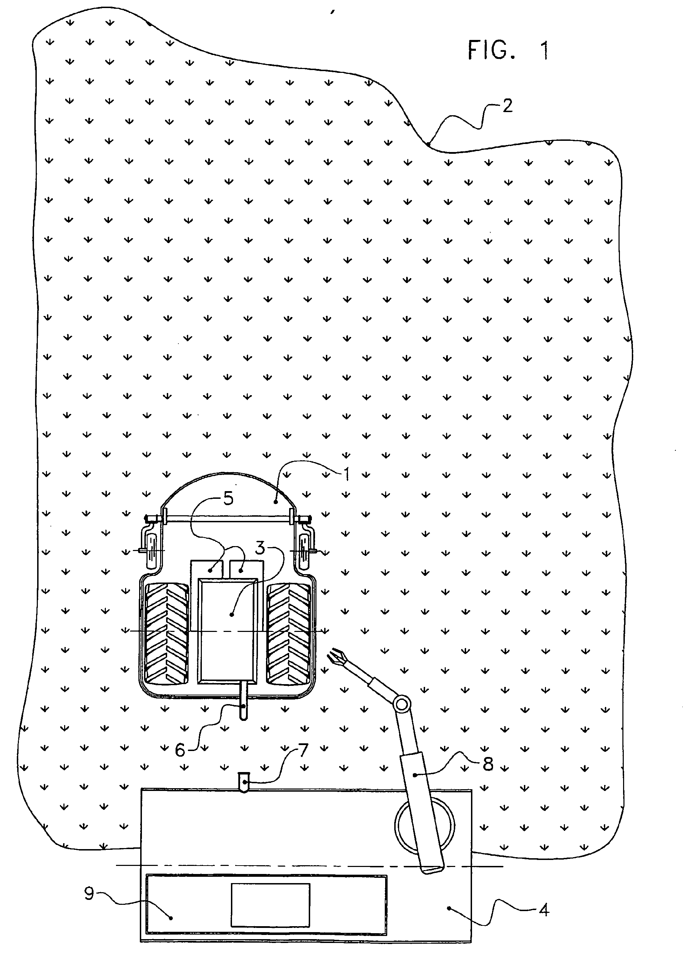

Figure 1 shows schematically in plan view an autonomous harvesting machine in an agricultural parcel in an embodiment of an assembly not according to the invention.

Figure 1 shows schematically in plan view an autonomous harvesting machine 1 in an agricultural parcel 2, but not an embodiment of the invention. It is pointed out here that an autonomously movable machine, i.e. a machine that does not require a driver for being moved, is known per se and will not be set out here in further detail for the sake of simplicity of the description. The autonomous harvesting machine 1 is suitable for performing a harvesting operation on the agricultural parcel 2 and comprises for this purpose for example a crop-pick-up device and/or a mowing-unit, which are known per se.

The harvesting machine 1 comprises a machine container 3 for containing a harvested product (for example grass). The autonomous harvesting machine 1 further comprises a (non-shown) route-information system known per se and provided with a memory for containing position data with respect to the agricultural parcel 2. In particular the position of a harvest container 4 that is capable of containing a relatively large amount of harvested product, is stored in the memory. Said data may be stored for example in the form of a ground plan. The route-information system further comprises a (non-shown) position-determining device known per se for determining the position of the autonomous harvesting machine 1 in the agricultural parcel 2 by means of for example a GPS-system. Thus it is possible for the control-unit of the autonomous harvesting machine 1 to move the harvesting machine 1 to the harvest container 4 with the aid of data from the route-information system, taking the amount of harvested product that is present, as measured for example by a weighing device 5 or another measuring device, into account.

In the embodiment shown the harvesting machine 1 comprises a mechanical protrusion 6 that pushes against a pressure mechanism 7 of the harvest container 4 when the harvesting machine 1 has been moved by the control-unit to the harvest container 4. Subsequently, by a mechanical operation, the harvested product can be taken from the machine container 3. Here may be used for example a gripper 8 that takes the amount of harvested product from the machine container or takes the entire machine container (in this case a removable machine container) from the harvesting machine.

When the stock in the harvest container 4 has reached a particular level, measured for example by a measuring device such as a weighing device, a corresponding signal can be transmitted, for example by telephone, by the measuring device to the owner of the parcel or other parties concerned. Apart from this, the signal can activate a processing device 9, for example a baler, a chopper, a drier or the like.

Although the invention has been described with reference to an autonomous harvesting machine that transports a harvested product to the harvest container, it will be obvious that making a harvested product ready for transport and/or for storage can also be performed by another transport machine or the like. The harvesting machine is in particular an autonomous baler (in which case air is removed from the bales, if desired) or a chopper, which are known per se.

## Claims

1. An assembly for performing a crop harvesting operation, which assembly is provided with an autonomous harvesting machine (1) that is movable over a parcel (2) for performing the crop harvesting operation, the autonomous harvesting machine (1) being provided with a machine container (3) for containing a first amount of harvested product, and with a harvest container (4) for containing the harvested product, wherein the assembly is provided with a measuring device (5) for measuring the amount of product in the machine container (3), and in that the assembly is further provided with a control-unit for automatically moving the harvesting machine (1) to the harvest container (4) with the aid of data from the measuring device (5), **characterized in that** the harvesting machine is provided with a processing device for making the harvested crop on which the harvesting operation has been performed ready for transport, in particular ready for storage.

2. An assembly as claimed in claim 1, **characterized in that** the processing device is able to chop, press, wrap or dry the harvested product.

3. An assembly as claimed in claim 1 or 2, **characterized in that** the control-unit is provided with a route-information system for containing route-information about the harvest container (4).

4. An assembly as claimed in any one of the preceding claims, **characterized in that** the assembly is provided with a position-determining system for determining the momentary position of the harvesting machine (1).

5. An assembly as claimed in any one of the preceding claims, **characterized in that** the assembly is provided with a measuring device for measuring the amount of product in the harvest container.

6. An assembly as claimed in claim 5, **characterized in that** the processing device is activated with the aid of data from the measuring device.

7. An assembly as claimed in any one of the preceding claims, **characterized in that** the harvesting machine (1) comprises a crop-pick-up device.

8. An assembly as claimed in any one of the preceding claims, **characterized in that** the harvesting machine (1) comprises a mowing-unit.

9. An assembly as claimed in any one of the preceding claims, **characterized in that** the autonomous harvesting machine (1) is an autonomous baler.

10. An assembly as claimed in any one of the preceding claims, **characterized in that** the autonomous harvesting machine (1) is an autonomous chopper.

## Patentansprüche

1. Anordnung zum Durchführen einer Erntetätigkeit, wobei die Anordnung mit einer autonomen Erntemaschine (1) versehen ist, die zur Durchführung der Erntetätigkeit über eine Parzelle (2) bewegbar ist, wobei die autonome Erntemaschine (1) mit einem Maschinenbehälter (3) zur Aufnahme einer ersten Menge an geerntetem Produkt und mit einem Erntebehälter (4) zur Aufnahme des geernteten Produkts versehen ist, wobei die Anordnung mit einer Messvorrichtung (5) zum Messen der Produktmenge in dem Maschinenbehälter (3) versehen ist, und wobei die Anordnung ferner mit einer Steuereinheit versehen ist, um die Erntemaschine (1) mit Hilfe von Daten von der Messvorrichtung (5) automatisch zu dem Erntebehälter (4) zu bewegen,
**dadurch gekennzeichnet, dass** die Erntemaschine mit einer Verarbeitungsvorrichtung versehen ist, um das geerntete Gut, an dem die Erntetätigkeit durchgeführt wurde, bereit zum Transport, insbesondere bereit zur Lagerung, zu machen.

2. Anordnung nach Anspruch 1,
**dadurch gekennzeichnet, dass** die Verarbeitungsvorrichtung in der Lage ist, das geerntete Produkt zu häckseln, zu pressen, einzuwickeln oder zu trocknen.

3. Anordnung nach Anspruch 1 oder 2,
**dadurch gekennzeichnet, dass** die Steuereinheit mit einem Routeninformationssystem zum Speichern von Routeninformationen über den Erntebehälter (4) versehen ist.

4. Anordnung nach einem der vorhergehenden Ansprüche,
**dadurch gekennzeichnet, dass** die Anordnung mit einem Positionsermittlungssystem zum Ermitteln der momentanen Position der Erntemaschine (1) versehen ist.

5. Anordnung nach einem der vorhergehenden Ansprüche,
**dadurch gekennzeichnet, dass** die Anordnung mit einer Messvorrichtung zum Messen der Produktmenge in dem Erntebehälter versehen ist.

6. Anordnung nach Anspruch 5,
**dadurch gekennzeichnet, dass** die Verarbeitungsvorrichtung mit Hilfe von Daten von der Messvorrichtung aktiviert wird.

7. Anordnung nach einem der vorhergehenden Ansprüche,
**dadurch gekennzeichnet, dass** die Erntemaschine (1) eine Gutaufnahmevorrichtung umfasst.

8. Anordnung nach einem der vorhergehenden Ansprüche,
**dadurch gekennzeichnet, dass** die Erntemaschine (1) ein Mähwerk umfasst.

9. Anordnung nach einem der vorhergehenden Ansprüche,
**dadurch gekennzeichnet, dass** die autonome Erntemaschine (1) eine autonome Ballenpresse ist.

10. Anordnung nach einem der vorhergehenden Ansprüche,
**dadurch gekennzeichnet, dass** die autonome Erntemaschine (1) ein autonomer Häcksler ist.

## Revendications

1. Ensemble pour l'exécution d'une opération de récolte de culture, lequel ensemble est pourvu d'une machine de récolte autonome (1) qui peut se déplacer sur une parcelle (2) pour exécuter l'opération de récolte de culture, la machine de récolte autonome (1) étant pourvue d'un conteneur de machine (3) pour contenir une première quantité du produit récolté, et d'un conteneur de récolte (4) pour contenir le produit récolté, dans lequel l'ensemble est pourvu d'un dispositif de mesure (5) pour mesurer la quantité de produit dans le conteneur de machine (3), et l'ensemble est, en outre, pourvu d'une unité de commande pour le déplacement automatique de la machine de récolte (1) jusqu'au conteneur de récolte (4) à l'aide de données provenant du dispositif de mesure (5), **caractérisé en ce que** la machine de récolte est pourvue d'un dispositif de traitement destiné à rendre la culture récoltée sur laquelle l'opération de récolte a été effectuée prête pour être transportée, en particulier prête pour être stockée.

2. Ensemble selon la revendication 1, **caractérisé en ce que** le dispositif de traitement est capable de hacher, presser, envelopper ou sécher le produit récolté.

3. Ensemble selon la revendication 1 ou 2, **caractérisé en ce que** l'unité de commande est pourvue d'un système d'information de trajet destiné à contenir des informations de trajet concernant le conteneur de récolte (4).

4. Ensemble selon l'une quelconque des revendications précédentes, **caractérisé en ce que** l'ensemble est pourvu d'un système de détermination de position pour déterminer la position momentanée de la machine de récolte (1).

5. Ensemble selon l'une quelconque des revendications précédentes, **caractérisé en ce que** l'ensemble est pourvu d'un dispositif de mesure pour mesurer la quantité de produit dans le conteneur de récolte.

6. Ensemble selon la revendication 5, **caractérisé en ce que** le dispositif de traitement est activé à l'aide de données provenant du dispositif de mesure.

7. Ensemble selon l'une quelconque des revendications précédentes, **caractérisé en ce que** la machine de récolte (1) comprend un dispositif de ramassage de récolte.

8. Ensemble selon l'une quelconque des revendications précédentes, **caractérisé en ce que** la machine de récolte (1) comprend une unité de fauchage.

9. Ensemble selon l'une quelconque des revendications précédentes, **caractérisé en ce que** la machine de récolte autonome (1) est une ramasseuse-presseuse autonome.

10. Ensemble selon l'une quelconque des revendications précédentes, **caractérisé en ce que** la machine de récolte autonome (1) est une hacheuse autonome.
